Europäisches Patentamt

European Patent Office

Office européen des brevets

(19)

(11) **EP 0 997 261 B1**

(12) **EUROPÄISCHE PATENTSCHRIFT**

(45) Veröffentlichungstag und Bekanntmachung des Hinweises auf die Patenterteilung:
**10.05.2000  Patentblatt 2000/19**

(51) Int Cl.⁷: $B29C\ 65/16$, $B29C\ 65/14$, $B23K\ 26/06$

(21) Anmeldenummer: **99101816.9**

(22) Anmeldetag: **28.01.1999**

(54) **Laserfügeverfahren und Vorrichtung zum Verbinden von verschiedenen Werkstücken aus Kunststoff oder Kunststoff mit anderen Materialien**

Laser welding method and apparatus for joining a plurality of plastic articles with each other or with other materials

Procédure et appareil de soudage avec laser pour relier divers articles en matière plastique entre eux ou avec d'autres matériaux

(84) Benannte Vertragsstaaten:
**AT BE CH DE ES FI FR GB IT LI NL SE**

(43) Veröffentlichungstag der Anmeldung:
**03.05.2000  Patentblatt 2000/18**

(73) Patentinhaber: **Leister Process Technologies 6060 Sarnen (CH)**

(72) Erfinder: **Chen, Jie-Wei 6055 Alpnach Dorf (CH)**

(74) Vertreter: **Klocke, Peter, Dipl.-Ing. Klocke & Späth Patentanwälte, Kappelstrasse 8 72160 Horb (DE)**

(56) Entgegenhaltungen:
**EP-A- 0 472 850        US-A- 5 279 693**

- **POTENTE H ET AL: "LASERSCHWEISSEN VON THERMOPLASTEN" PLASTVERARBEITER, Bd. 46, Nr. 9, 1. September 1995, Seiten 42-44, 46, XP000535361**

**Beschreibung**

Die vorliegende Erfindung betrifft ein Laserfügeverfahren zum Verbinden von verschiedenen Werkstücken aus Kunststoff oder Kunststoff mit anderen Materialien, wobei das obere, der Laserquelle zugewandte Werkstück aus einem für den Laserstrahl transparenten Material und das zweite Werkstück aus einem für den Laserstrahl absorbierenden Material besteht, so daß die aneinander angrenzenden Kontaktflächen der beiden Werkstücke aufschmelzen und bei der anschließenden Abkühlung unter Druck sich miteinander verbinden. Die Erfindung betrifft außerdem eine Vorrichtung zur Durchführung des Verfahrens.

Dieses Verfahren ist grundsätzlich für Werkstücke aus Kunststoff aus der US-A-4 636 609 bekannt. Mittlerweile gibt es eine Vielzahl weiterer Schutzrechte, in denen verschiedene Anwendungsfälle dieses Verfahrens sowie Vorrichtungen zur Durchführung des Verfahrens bei der Verbindung besonders ausgestalteter Werkstücke beschrieben sind. Beispielhaft wird hier die Schrift WO 95/26869 sowie die im zugehörigen Recherchenbericht zitierten Druckschriften genannt.

Bei diesen bekannten Verfahren werden Kunststoffplatten, -folien und Spritzgußteile durch scharf gebündelte Laserstrahlen verschweisst, wobei ein punktförmig fokussierter Laserstrahl zum Verschweissen bzw. Verschmelzen der Kunststoffmaterialen verwendet wird. Der Verlauf der Schweissnaht ist durch eine programmierbare Strahlführung der Laserstrahlen oder die Bewegung der Werkstücke realisiert. Zum Verbinden von Flächen oder von feinstrukturierten Gegenständen, wie sie im Rahmen der Mikromechanik oder Mikrosystemtechnik benötigt werden, wobei nur die erwünschte Zone verbunden werden soll, liegt bis jetzt kein effektives und wirkungsvolles Verfahren vor. Eine mögliche Alternative zu diesem technischen Wunsch wäre ein solches Verfahren, bei dem die gesamte Fläche durch zweidimensionales rastern (scanning) eines punktförmigen Laserstrahls zur Verbindung gebracht wird. Nachteilig bei diesem Verfahren ist, daß die Prozeßdauer durch das feine Rastern erheblich erhöht wird. Ein weiteres Problem liegt noch in der Qualität der Fügenaht, die sowohl vom Rasterabstand als auch von der Rastergeschwindigkeit des Laserpunktes und Regelverhalten der Laserleistung beeinflußt wird. Eine hochwertige Verbindung benötigt deshalb einen dichten Rasterabstand und eine niedrige Rastergeschwindigkeit wegen der dynamischen Eigenschaft des Bewegungssystems. Bei hohen Bewegungsgeschwindigkeiten kann die Fügenaht sehr problematisch sein. Insbesondere beim Wendepunkt, wo sich die Grenzlinie zwischen der verbundenen und der unverbundenen Fläche befindet, kann es häufig zu einem unbefriedigenden Fügeergebnis führen. Ein weiterer Nachteil bei einem flächigen Verbinden mit einem punktförmigen fokussierten Laserstrahl ist die Verteilung der Strahlenintensität, da die Gauß'sche Verteilung der Intensität eine ungleichmäßige Aufschmelze verursacht.

Aus der US-A-4 069 080 ist ein Verfahren und eine Vorrichtung bekannt, bei dem unter Verwendung eines $CO_2$-Lasers und entsprechenden optischen Einrichtungen eine Laserlinie auf einem Kunststoff fokussiert und damit durch Verschweissen zweier Folienhälften ein Beutel hergestellt wird.

Der vorliegenden Erfindung liegt daher die Aufgabe zugrunde, eine Möglichkeit vorzuschlagen, um eine hochwertige flächige Verbindung von plan aufeinanderliegenden Körpern, wobei mindestens ein Körper aus Kunststoff besteht, mit einer wohl definierten Fügeszone vorzuschlagen.

Diese Aufgabe wird erfindungsgemäß durch ein Verfahren mit den Merkmalen des Anspruchs 1 gelöst. Weitere vorteilhafte Ausgestaltungen des Verfahrens sind den Unteransprüchen zu entnehmen. Die Aufgabe wird außerdem durch eine Vorrichtung mit den Merkmalen des Anspruchs 11 gelöst. Weitere vorteilhafte Ausgestaltungen der Vorrichtung sind den diesbezüglich rückbezogenen Unteransprüchen zu entnehmen.

Die vorliegende Erfindung basiert auf dem Gedanken, daß zwischen der Laserquelle und den zu verbindenden Werkstücken zur Verbindung der Werkstücke in einem bestimmten Fügebereich der Kontaktfläche eine Maske aus einem laserstrahlundurchlässigen Material angeordnet wird, deren Strukturen größer sind als die verwendete Wellenlänge des Laserstrahls. Unter dem Begriff Verbindung wird im nachfolgenden Verschweissung, Verschmelzung, Kleben, Anhaften, Ansprengen oder dergleichen verstanden. Des weiteren wird die Laserquelle derart auf die Kontaktfläche eingestellt, daß an dieser eine Linie entsteht. Zusätzlich werden der Laserstrahl und die Werkstücke relativ zueinander bewegt. Grundsätzlich kann ein Nd:YAG-Laser, $CO_2$-Laser oder ein Halbleiterlaser mit Laserstrahlen mit einer Wellenlänge von 0,7 - 10,6 µm verwendet werden, wobei durch entsprechende optische Maßnahmen sichergestellt werden muß, daß an der Kontaktfläche ein linienförmiger Laserstrahl vorhanden ist. Die Werkstücke werden durch den Eigendruck oder in bekannter Art und Weise mittels einer geeigneten Spannvorrichtung zusammengepreßt. Auf den Werkstückenwird eine Maske, beispielsweise in Form eines dünnen Metallbleches oder einer auf einen Träger aufgedampften Metallschicht, aufgelegt, die Aussparungen aufweist, durch die der Laserstrahl hindurchdringen kann und die den zu verbindenden Strukturen entsprechen. Dabei können die Strukturen unter einem Millimeter liegen. Solange die Dimensionen der feinen Struktur der Maske das 5 - 10fache der verwendeten Wellenlänge des Strahls betragen, wird kein das Bestrahlungsergebnis nachteilig beeinflussender Beugungseffekt entstehen. Die Laserstrahlung dringt im wesentlichen senkrecht oder in einem Winkel, der nur unwesentlichen Einfluß auf die Grenzlinie des Fügebereich hat, durch die Öffnungen der Maske und das obere Werkstück bis zur Kontaktfläche zwischen den beiden Werkstücken. Die Strahlen, die auf die Maske auffallen, werden zurückreflektiert. Die dabei möglichen Fügenahtstrukturen werden hauptsächlich von der Maske und den thermischen Eigenschaften des Materials bestimmt Durch die Relativbewegung zwischen dem Laserstrahl und der Werkstücke, die durch Bewegung der Laserquelle, der Werkstücke oder eine entsprechend gesteuerte Laserstrahl-Umlenkeinrichtung realisiert werden kann, werden die Öffnungen in der Maske kontinuierlich oder - im Falle von kleinen Fügebereichen bei gleicher Linienbreite mit dem Fügebereich - vollständig von dem Laserstrahl durchdrungen und eine entsprechend strukturierte Verbindung der Werkstücke an den gewünschten Fügezonen in der Kontaktfläche erreicht. Je nach Anordnung und Anwendungsbereich kann die Maske mit den Werkstücken relativ zu dem Laserstrahl oder die Werkstücke relativ zum Laserstrahl mit Maske bewegt werden.

Dieses Verfahren ermöglicht somit, Kunststoffplatten, -spritzteile oder -folien miteinander oder mit anderen Materialien mit kurzer Taktzeit und einer hochwertigen Qualität zu verbinden oder Werkstücken, die fein strukturiert sind, ohne Verletzung der Strukturierung auf der erwünschten Zone präzise flächig zu verbinden. So können beispielsweise beliebig geformte linienförmige Konturen, die vorher bei der Verwendung eines punktförmigen Laserstrahls abgefahren werden mußten, durch die linienförmige Ausgestaltung des Laserstrahls einfach realisiert werden, in dem dieser einmal über die entsprechend ausgestaltete Maske geführt wird.

Vorzugsweise wird der Laserstrahl senkrecht zu dem Fügebereich der Kontaktfläche geführt, um eine möglichst genaue Abbildung insbesondere bei kleinen Strukturen, zu erzielen und unnötige Schatteneffekte zu vermeiden.

Vorteilhafterweise werden die Werkstücke über den Eigendruck hinaus zusammengepreßt, damit sie gut aufeinander thermisch kontaktiert sind und während des Schmelzvorgangs durch die Laserbestrahlung wegen der Wärmeausdehnung des geschmolzenen Materials mit Fügedruck zusammengehalten werden.

Um durch zusätzliche Strukturierung die Ausbreitung der flüssigen Schmelze zu leiten oder zu stoppen kann, gemäß einer weiteren vorteilhaften Ausgestaltung, angrenzend an den Fügebereich an einem Werkstück in Richtung des anderen Werkstücks, ein Vorsprung angeordnet werden, so daß beim Zusammenpressen der beiden Werkstücke zwischen den zu fügenden Berührungsflächen der der Werkstücke und dem Vorsprung ein Hohlraum entsteht. Derartige Vorsprünge können auch wechselseitig an den Werkstücken vorgesehen werden. Sobald der Fügebereich von der Laserstrahlung bestrahlt wird, wird dann die flüssige Schmelze in diesen Hohlraum umgeleitet, da innerhalb dieses Hohlraumes der Druck viel niedriger ist, als in dem Kontaktflächenbereich, in dem sich die beiden Werkstücke unter Druck berühren. Dadurch kann eine unerwünschte Flußrichtung der Schmelze in Bereiche, die frei bleiben sollen, verhindert werden. Dies ist insbesondere bei Mikroteilen von großem Vorteil. Gemäß einer weiteren bevorzugten Ausbildung des erfindungsgemäßen Verfahrens wird die Relativgeschwindigkeit zwischen der Laserquelle und den Werkstücken in Abhängigkeit von der maximalen Laserleistung, die zur Erreichung der erforderlichen Schmelztemperatur notwendig ist, möglichst hoch gewählt. Dies bewirkt eine Optimierung mit dem Ziel, daß sich die Maskenstruktur scharf auf der gewünschten Fügezone abbildet, in dem die für den Schmelzvorgang notwendige Wärmeenergie nur kurzzeitig auf die Schmelzzone gebracht wird. Dadurch kühlt das geschmolzene Material nach der Laserbestrahlung sofort ab und verfestigt sich, bevor das angrenzende Material anfängt zu fließen.

Vorteilhafterweise wird die Linienbreite des Laserstrahls derart gewählt, daß sie der Breite des Fügebereichs entspricht. Dies kann in Abhängigkeit der Leistung der Laserquelle durch eine oder mehrere nebeneinander angeordnete Laserquellen realisiert werden. Mit steigender Leistungsfähigkeit der Laserquelle kann der auf einmal bestrahlte Fügebereich ebenfalls in der Fläche sich vergrößern. Dies bietet sich besonders bei kleinen Fügebereichen im $cm^2$-Bereich an. Als Laserquellen können auch hier $CO_2$-Laser oder Halbleiterlaser eingesetzt werden. Damit wird eine Erwärmung des gewünschten Fügebereichs auf einmal erreicht.

Gemäß einer besonders bevorzugten Ausführungsform des Verfahrens wird der linienförmige Laserstrahl durch mindestens einen Halbleiterlaser (Diodenlaser) erzeugt. Entsprechend der gewünschten Linienlänge kann ein Diodenlaser oder eine Reihe aus mehreren dieser nebeneinander angeordneten Diodenlaser verwendet werden. Dies ermöglicht gemäß einer weiteren Ausbildung des Verfahrens die Einstellung der Linienlänge durch den Abstand der Laserquelle von der Kontaktfläche bei entsprechender Anpassung der Laserleistung für die erforderliche Schmelztemperatur. Dazu wird der Laserstrahl in der einen Achse (schnelle Achse) kollimiert und in der anderen Achse (langsame Achse) Divergenz zugelassen. Außerdem kann die Linienbreite des Laserstrahls bei Abstandsänderung der Laserquelle von der Kontaktfläche im wesentlichen konstant gehalten werden. Durch entsprechende bekannte optische Anordnungen am Diodenlaser wird ein vom Diodenlaser ausgehender trapezförmiger Strahl mit im wesentlichen schmalen länglichen Querschnitt erzeugt, wodurch sich die gewünschte Linienbreite einstellen und durch Anpassung der Laserleistung bei jedem beliebigen Abstand der Laserquelle von der Kontaktfläche die erforderliche Energiedichte realisieren läßt.

Ein besonders wirtschaftliches Verfahren wird dadurch erzielt, daß die Relativbewegung zwischen dem Laserstrahl und den Werkstücken durch einen um eine parallele Achse zu den Werkstücken schwenk- oder drehbaren Spiegel erzeugt wird. Dieser kann in aus der Optik bekannter Art und Weise schnell in seiner Bewegung gesteuert werden, so daß eine sehr geringe Taktzeit realisiert werden kann.

Die erfindungsgemäße Vorrichtung, die eine Durchführung des Verfahrens erlaubt, weist in einer bevorzugten Ausführungsform eine Laserquelle, beispielsweise einen Diodenlaser auf, die einen Laserstrahl mit einem länglichen Querschnitt als Laserlinie erzeugt und, gemäß einer weiter bevorzugten Ausführungsform, einen um eine zur Kontaktfläche parallele Achse schwenk- oder drehbaren Spiegel, der über der Kontaktfläche angeordnet ist und den Laserstrahl von der Laserquelle auf die Kontaktfläche umlenkt und mittels eines Antriebs betätigbar ist, sowie eine Spannvorrichtung, zwischen der sich die zu verbindenden Werkstücke und die Maske befinden, wobei die der Laserquelle zugewandte Platte der Spannvorrichtung aus einem für den Laserstrahl transparenten Material besteht.

Nachfolgend wird die Erfindung anhand von Ausführungsbeispielen in Verbindung mit den begleitenden Zeichnungen näher erläutert. Es stellen dar:

Figur 1    eine prinzipielle Anordnung zur Verschweissung von Kunststoffplatten mit mittels einer Maske vorbestimmten Fügebereichen;

Figur 2    die Geometrie des Fügebereichs während des flächigen Schweissvorgangs;

Figur 3    einen vergrößerten Ausschnitt von fein strukturierten Kunststoffplatten und die Erweiterung der Schmelze;

Figur 4    eine prinzipielle Vorrichtung zur Verschweissung mit Maskentechnik;

Figur 5    ein Ausführungsbeispiel zur Begrenzung der flüssigen Schmelze in unerwünschte Bereiche; und

Figur 6    der prinzipielle Aufbau einer Vorrichtung mit einem schwenkbaren Spiegel über den Werkstücken.

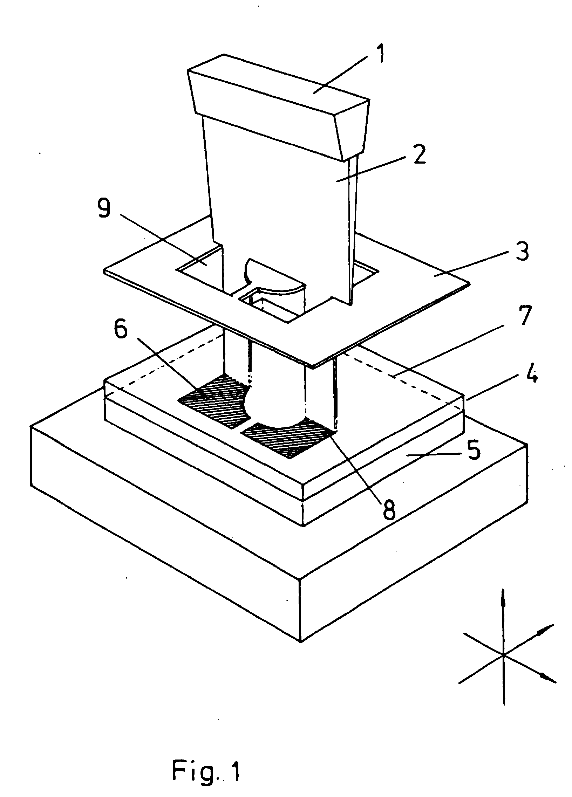

Figur 1 zeigte eine Anordnung zum flächigen Verschweissen von Kunststoffplatten 4, 5, die nur in einem bestimmten Fügebereich 6 mittels eines Laserstrahls 2 und einer Maske 3 verschweisst werden sollen. Die Anordnung besteht aus einer Laserquelle 1, beispielsweise einem oder mehreren in Linie angeordneten Halbleiterlaser (Diodenlaser), deren emittierte Laserstrahlung direkt mit einer nicht dargestellten Mikrooptik kollimiert und auf eine Linie fokussiert ist. Die Laserquelle 1 wird so plaziert, daß der Laserstrahl 2 als Strahlenvorhang senkrecht durch die Maske 3 in den Fügebereich 6 der Kontaktzone 7 zwischen den beiden Kunststoffplatten 4, 5 gebracht wird. Dabei ist, wie für dieses Verfahren erforderlich, die Kunststoffplatte 4 für die Laserstrahlung transmittierend und die Kunststoffplatte 5 absorbierend ausgebildet. Der Laserstrahl 2 wird relativ zu der Maske 3 bzw. den Kunststoffplatten 4, 5 kontinuierlich bewegt, so daß die Kunststoffplatten 4, 5 in dem Fügebereich 6 direkt unter der Laserlinie 8 in einen schmelzflüssigen Zustand gelangen und anschließend nach der Abkühlung verfestigen. Der schattierte Fügebereich 6 stellt die bereits entstandene Schweissverbindung infolge der Durchstrahlung der Maske 3 durch die Öffnung 9 dar.

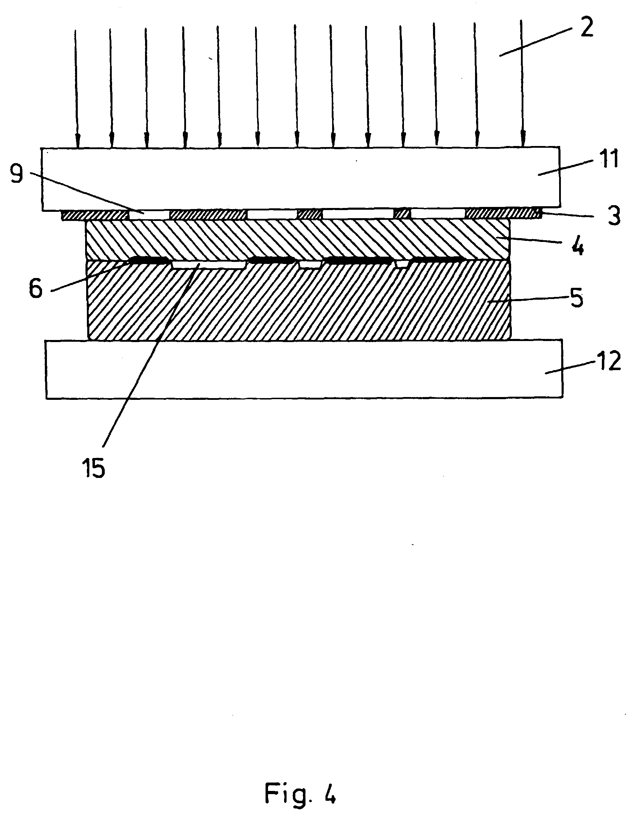

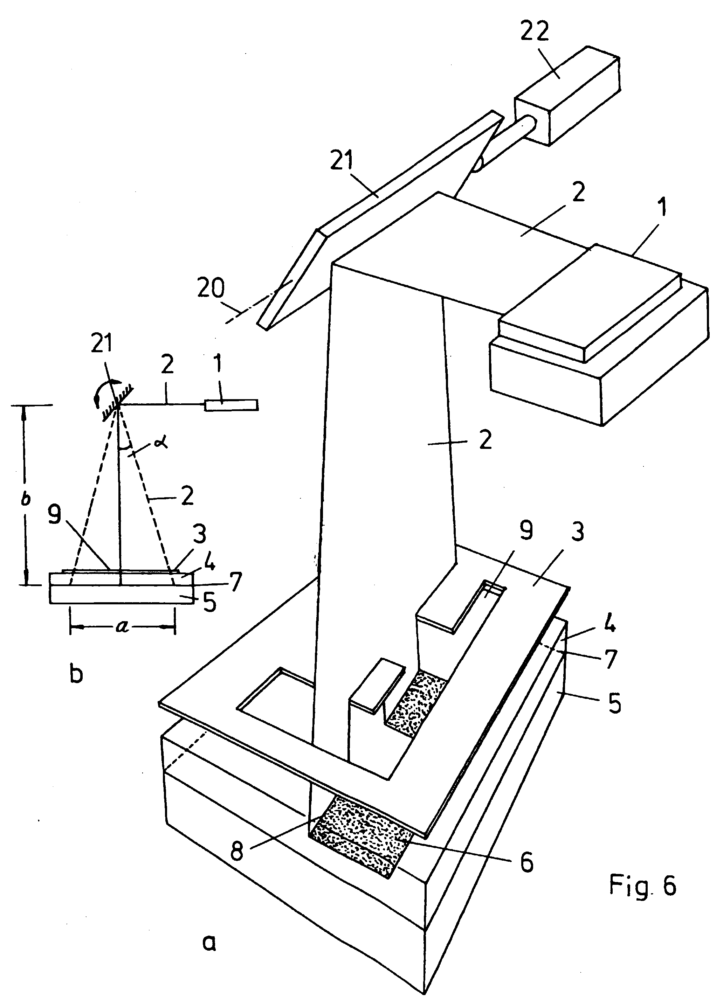

In Figur 1 ist die Maske 3 zu der Kunststoffplatte 4 zum Zweck der Darstellung mit Distanz dargestellt. Wie aus Figur 4 ersichtlich, werden die Kunststoffplatten 4 bzw. 5 und die Maske 3 durch eine im einzelnen nicht dargestellte Spannvorrichtung, die zwei stabile ebene Platten 11, 12 umfaßt, zusammengepreßt. Dies wird dann als eine komplette Einheit entweder unbeweglich fixiert oder auf einem nicht dargestellten Lineartisch befestigt. Eine andere Möglichkeit ist in der Figur 6 dargestellt und im Zusammenhang mit dieser diskutiert. In Figur 4 ist die obere Platte 11 aus einem Quarz- und Saphirglas oder auch aus einer Kunststoffplatte hergestellt, die sowohl die Laserstrahlung als auch die Wärmestrahlung bis zu Wellenlängen von 2,5 $\mu$m bzw. 8 $\mu$m durchlassen. Diese Spannvorrichtung sorgt dafür, daß die miteinander zu verschweissenden Kunststoffplatten 4, 5 gut aufeinander thermisch kontaktiert sind und während des Schmelzvorganges durch die Laserstrahlung wegen der Wärmeausdehnung der Schmelze mit vorhandenem Fügedruck zusammengehalten werden. Die hohe Transmission der oberen Spannplatte 11 im Infrarotbereich ermöglicht die Temperaturerfassung in dem Fügebereich 6, so daß der Schweissprozeß optimal gesteuert werden kann.

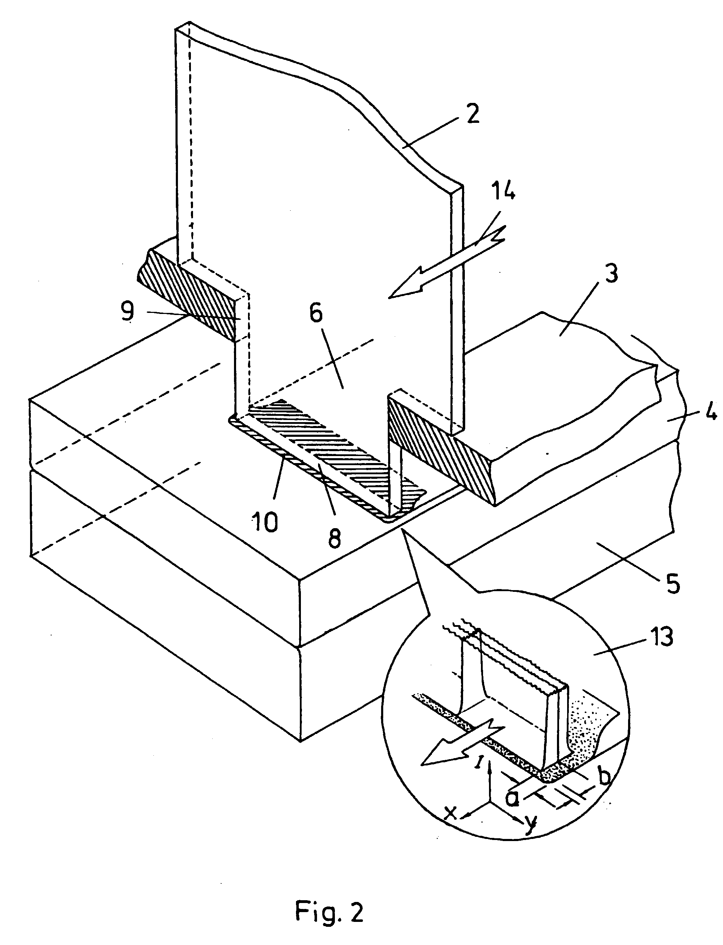

In Figur 2 ist der flächige Schweissvorgang genauer dargestellt Der vorhangartige Laserstrahl 2 bestrahlt die Fläche 8 durch die Öffnung 9 der Maske 3. Durch die Erwärmung des Materials entlang der Laserlinie 8 entsteht ein Ausbreitungsbereich 10, der nachfolgend in Verbindung mit der Darstellung der Lichtintensität I im Kreis 13 näher erläutert wird. Der Pfeil 14 deutet die Bewegungsrichtung des Laserstrahls 2 an. Die Geometrie der Schweisszone wird allgemein durch die Faktoren Schweissvorgang, Schmelztiefe, Bestrahlungszone, thermische Diffusionseigenschaft des Fügematerials und die vewendete Laserleistung bestimmt. Die Ausbreitung der Schmelzes sowie die Parameter a und b in Figur 2 sind in der Regel physikalisch erklärbar. Für einen Schweissvorgang mit der Laserleistung P (Watt) und Geschwindigkeit v (m/sec) sind mit den Ausbreitungsparametern a bzw. b über die folgende Schweissbedingung (vergleiche "$CO_2$ Laser Welding of Polymers", W.W. Duley & R.E. Mueller, Polymer Engineering and Science, Vol. 32, No. 9, P-P 582-585 (1992)) verbunden:

$$a, b \sim \frac{P}{vd\rho c_p T_m}$$

wobei $\rho$ die Dichte des Fügematerials (kg m$^{-3}$), $c_p$ die Wärmekapazität (J kg$^{-1}$ K$^{-1}$), d die Schmelztiefe (m) und $T_m$ die Schmelztemperatur (K) sind, d.h. eine kontrollierbare Schmelzausbreitung ist durch die Optimierung von Laserleistung P, Bewegungsgeschwindigkeit v und Schmelztiefe d zu erreichen.

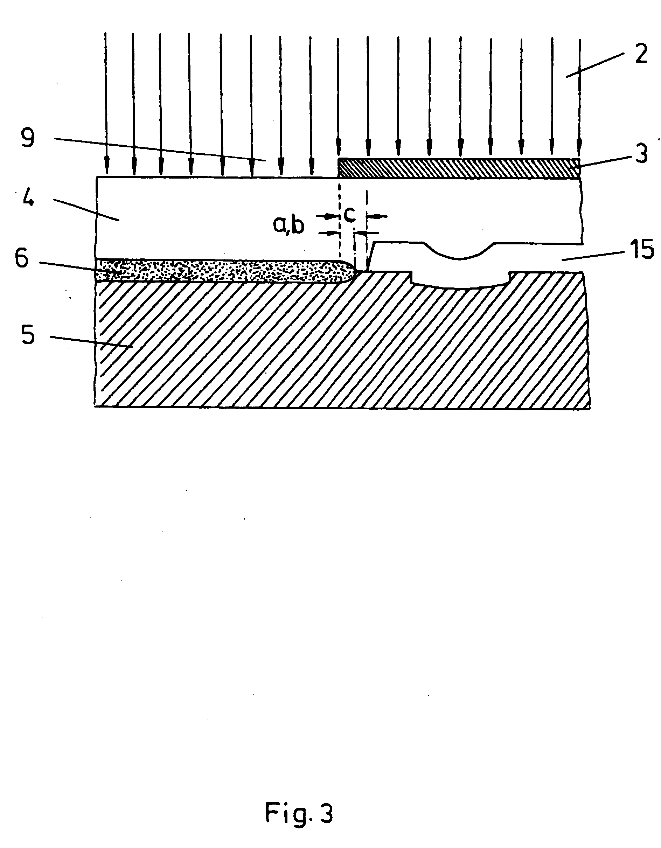

In Figur 3 ist ein vergrößerter Ausschnitt für eine feine Strukturierung, beispielsweise für Elemente der Mikrotechnik und Mikrosystemtechnik, und die Ausbreitung der Schmelze dargestellt. Wie weit die Struktur 15 von der Maske 3 abgedeckt werden muß, ist von den verwendeten Kunststoffmaterialien und den optimierten Schweissparametern P und v abhängig. Auf jeden Fall muß sichergestellt werden, daß keine Schmelze in die schweissnahtfreie Zone 15 gelangt, da anderenfalls die Funktion des Teils nicht mehr gewährleistet ist. Die übermäßige Abdeckung c zwischen der schweissnahtfreien Zone 15 und dem Rand der Öffnung 9 der Maske 3 ist notwendig, da die Ausbreitung des Schmelzes nicht durch die Prozeßoptimierung völlig ausgeschlossen werden kann. Als Regel, die beim Maskendesign eingehalten werden muß gilt c ≥2 a,b.

Untersuchungen mittels eines Diodenlasers von 25 W Leistung, der Laserstrahlen mit einer Wellenlänge von 940 nm erzeugt, die gut geeignet für die meisten Kunststoffmaterialien ist, und dem Kunststoffmaterial Polycarbonat (PC) haben ergeben, daß gute Ergebnisse hinsichtlich des Schmelzverhaltens erzielt werden können. So wurden Kanäle mit einer Breite von 1.2, 1.0 und 0.8 mm, die durch eine Maske zugedeckt wurden, mit zunehmender Bestrahlungsenergie durch die Schmelze, die von der Schweisszone nach außen fließt, überschwemmt. Es ist noch zu erwähnen, daß sich die Schmelze sowohl bei der durch die Maske 3 begrenzten Kante als auch bei der eigenen Linienkante des Laserstrahls 2 gleichmäßig nach außen ausbreitet. Eine Optimierung mit dem Ziel, daß sich die Maskenstruktur scharf auf der gewünschten Schmelzzone ausbildet, kann dadurch erzielt werden, daß genügend Wärmeenergie innerhalb einer kurzen Taktzeit auf die Schmelzzone gebracht wird. Dies bewirkt, daß die flüssige Schmelze nach der Laserbestrahlung anschließend sofort abkühlt und verfestigt wird, bevor sie anfängt zu fließen. Es ist daher darauf zu achten, daß in Abhängigkeit von der zur Verfügung stehenden Leistung der Laserquelle eine möglichst kurze Bestrahlungszeit, d.h. eine möglichst hohe Relativgeschwindigkeit zwischen Laserstrahl und Maske mit Werkstücken eingestellt wird, wobei selbstverständlich die Leistung ausreichen muß, zumindest einen Schmelzvorgang einzuleiten.

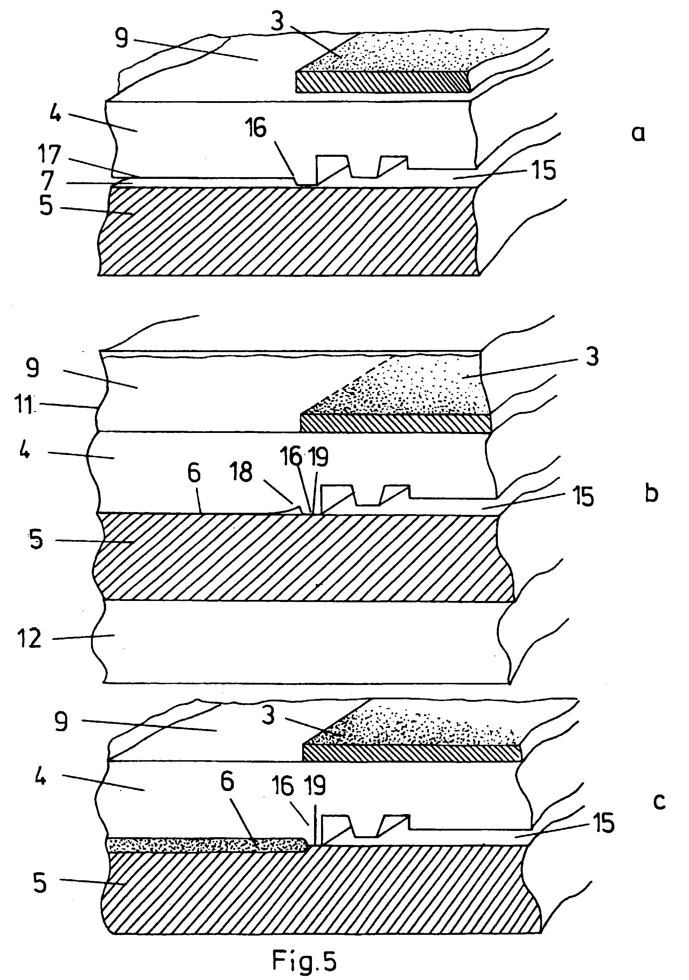

Figur 5 zeigt schematisch eine Möglichkeit, die es erlaubt, durch eine zusätzliche Strukturierung die Ausbreitung der flüssigen Schmelze zu leiten oder zu stoppen. In Figur 5a ist nur die Maske 3 sowie die Kunststoffplatten 4, 5 in einer anpreßfreien Situation dargestellt, wobei eine der Platten - im Ausführungsbeispiel die Platte 4 - angrenzend an die freie Struktur 15 eine zusätzliche Strukturierung in Form eines Vorsprungs 16 aufweist. Der Vorsprung 16 steht gegenüber der Unterseite 17, die mit der Oberseite der Kunststoffplatte 5 die Kontaktfläche bildet, hervor. Der Rand der Öffnung 9 in der Maske 3 deckt sich mit dem Fügebereich 6, der an dem Vorsprung 16 endet. In Figur 6b werden die zu verbindenden Kunststoffplatten 4, 5 mit den Spannplatten 11, 12 eng zusammengepreßt, wobei die Maske 3 in der oberen Spannplatte 11 integriert ist. Dadurch entsteht angrenzend an den Vorsprung 16 ein dünner Luftschlitz 18. Sobald der Fügebereich 6 durch den Laserstrahl beleuchtet ist, wird die flüssige Schmelze in diesen Luftschlitzraum 18 umgeleitet, da dort der Druck viel niedriger als an der Berührungsfläche 19 zwischen dem Vorsprung 16 und der Oberseite der Kunststoffplatte 5 ist. Dadurch kann gezielt das unerwünschte Eindringen der Schmelze in den Freiraum 15 verhindert werden.

Figur 6 zeigt den prinzipiellen Aufbau einer Vorrichtung mit einem um eine Achse 20 parallel zur Kontaktfläche 7 angeordneten Spiegel 21. Der Spiegel 21, der mittels eines Antriebs 22 sehr schnell verstellt werden kann, bewirkt die Bewegung des Laserstrahls 2 über die Maske 3. Dieses Verfahren und diese Vorrichtung erlauben eine hohe Strahlungsgeschwindigkeit und Taktzeit, ohne daß aufwendige Bewegungsmechanismen, z.B. Lineartisch, erforderlich sind. Hierzu wird die Laserquelle 1 ebenfalls oberhalb der Fügepartner angeordnet und ein vorhangähnlicher Laserstrahl 2, wie bereits in Figur 1 dargestellt, mit einer geringen Linienbreite erzeugt. Dies erfolgt derart, daß die sog. schnelle axiale Richtung der von einem Halbleiterlaser erzeugten Strahlen kollimiert und in der sog. langsamen axialen Richtung die Strahlen mit kleinem Divergenzwinkel umgeformt werden. Die maximale Länge der Laserstrahl linie in der Kontaktfläche 7 ergibt sich aus der maximalen Länge des Fügebereichs. Durch die Veränderung des Arbeitsabstandes kann die Länge dieser Laserlinie 8 an die Länge des Fügebereichs 6 angepaßt werden. Durch Änderung der Leistung der Laserquelle erfolgt dann eine Anpassung an die minimale erforderliche Schmelztemperatur. Durch die Verwendung eines Laserstrahls 2 mit einem länglichen Querschnitt über die gesamte Entfernung zwischen Laserquelle 1 und Kontaktfläche 7 kann auf einfache Weise eine Anpassung an veränderte Abmessungen der zu verschweissenden Fügebereiche 6 vorgenommen werden.

Um eine möglichst große Genauigkeit zu erzielen, wird der Spiegel mittig über der Maske 3 oder der Öffnung 9 in der Maske 3 angeordnet. Wie in Figur 6b dargestellt, ist das Ergebnis ausreichend genau, wenn die Bedingung

$$b >> \frac{a}{2\,\mathrm{tg}\alpha}$$

erfüllt ist, wobei b die Entfernung zwischen Kontaktfläche 7 und Spiegel 21, a die Länge des Fügebereichs und α der halbe Spreizwinkel sind. Damit sind dieses Verfahren und diese Vorrichtung sowohl für kleine als auch größere Strukturen einsetzbar.

In den beschriebenen Ausführungsbeispielen werden Laserstrahlen mit einer Wellenlänge von 0,7 - 10,6 μm eingesetzt.

**Patentansprüche**

1. Laserfügeverfahren zum Verbinden von verschiedenen Werkstücken (4, 5) aus Kunststoff oder Kunststoff mit anderen Materialien, wobei das obere, der Laserquelle (1) zugewandte Werkstück (4) aus einem für den Laserstrahl (2) transparenten Material und das zweite Werkstück (5) aus einem für den Laserstrahl (2) absorbierenden Material besteht, so daß die aneinander angrenzenden Kontaktflächen (7) der beiden Werkstücke (4, 5) aufschmelzen und bei der anschließenden Abkühlung unter Druck sich miteinander verbinden, **dadurch gekennzeichnet,** daß zwischen der Laserquelle (1) und den zu verbindenden Werkstücken (4, 5) zur Verbindung der Werkstücke in einem bestimmten Fügebereich (6) der Kontaktfläche (7) eine Maske (3) aus einem laserundurchlässigen Material angeordnet wird, deren Strukturen (9) größer sind als die verwendete Wellenlänge des Laserstrahls (2), die Laserquelle (1) derart auf die Kontaktfläche (7) eingestellt wird, daß an dieser eine Linie (8) entsteht, und die Maske (3) zusammen mit den Werkstücken (4, 5) oder der Laserstrahl (2) zusammen mit der Maske (3) bewegt werden.

2. Verfahren nach Anspruch 1, **dadurch gekennzeichnet,** daß der Laserstrahl (2) senkrecht über den Fügebereich (6) der Kontaktfläche (7) angeordnet wird.

3. Verfahren nach Anspruch 1 oder 2, **dadurch gekennzeichnet,** daß beim Fügen der zu verbindenden Werkstücke (4, 5) ein zusätzlicher Fügedruck aufgebracht wird.

4. Verfahren nach Anspruch 3, **dadurch gekennzeichnet**, daß angrenzend an den Fügebereich (3) mindestens ein Werkstück (4, 5) in Richtung des anderen Werkstücks (5, 4) einen Vorsprung (16) aufweist, so daß beim Zusammenpressen die beiden Werkstücke (4, 5) zwischen der zu verbindenden Kontaktfläche (7) und dem Vorsprung (16) ein Hohlraum (18) entsteht.

5. Verfahren nach einem der vorangegangenen Ansprüche, **dadurch gekennzeichnet,** daß die Relativgeschwindigkeit zwischen der Laserquelle (1) und den Werkstücken (4, 5) in Abhängigkeit von der maximalen Laserleistung, die zur Erreichung der erforderlichen Schmelztemperatur notwendig ist, möglichst hoch gewählt wird.

6. Verfahren nach einem der vorangegangenen Ansprüche, **dadurch gekennzeichnet,** daß die Linienbreite im wesentlichen gleich der Breite des Fügebereichs gewählt wird.

7. Verfahren nach einem der vorangegangenen Ansprüche, **dadurch gekennzeichnet,** daß der linienförmige Laserstrahl (2) durch mindestens einen Halbleiterlaser erzeugt wird.

8. Verfahren nach Anspruch 7, **dadurch gekennzeichnet**, daß die Länge der Laserlinie (8) durch den Abstand der Laserquelle (1) von der Kontaktfläche (7) und entsprechender Anpassung der Laserleistung für die erforderliche Schmelztemperatur eingestellt wird.

9. Verfahren nach Anspruch 7, **dadurch gekennzeichnet,** daß die Breite des Laserstrahls (2) bei Abstandsänderung der Laserquelle (1) von der Kontaktfläche (7) im wesentlichen konstant gehalten wird.

10. Verfahren nach einem der vorangegangenen Ansprüche, **dadurch gekennzeichnet,** daß die Relativbewegung zwischen dem Laserstrahl (2) und der Kontaktfläche (7) durch einen um eine parallele Achse (20) zur Kontaktfläche (7) schwenk- oder drehbaren Spiegel (21) erzeugt wird.

11. Vorrichtung zum Verbinden von verschiedenen Werkstücken (4, 5) aus Kunststoff oder Kunststoffe mit anderen Materialien mittels Laserstrahlen, wobei das obere, der Laserquelle (1) zugewandte Werkstück (4) aus einem für den Laserstrahl (2) transparenten Material und das zweite Werkstück (5) aus einem für den Laserstrahl (2) absorbierenden Material besteht, so daß die aneinander angrenzenden Kontaktflächen (7) der beiden Werkstücke (4, 5) aufschmelzen und bei der anschließenden Abkühlung unter Druck sich miteinander verbinden, **gekennzeichnet durch** eine Laserquelle (1) und eine Maske (3) aus einem laserundurchlässigen Material zwischen den zu verbindenden Werkstücken (4, 5), wobei die Strukturen (9) der Maske größer sind als die verwendete Wellenlänge des Laserstrahls (2), die Laserquelle (1) derart auf die Kontaktfläche (7) eingestellt ist, daß an dieser eine Fokuslinie (8) entsteht, und einer Einrichtung (21, 22) zur kontinuierlichen Relativbewegung des Laserstrahl (2) und der Werkstücke (4, 5) zueinander.

12. Vorrichtung nach Anspruch 11, **dadurch gekennzeichnet,** daß der Laserstrahl (2) senkrecht über den Fügebereich (6) der Kontaktfläche (7) angeordnet ist.

13. Vorrichtung nach Anspruch 11 oder 12, **dadurch gekennzeichnet,** daß eine Spannvorrichtung (11, 12) zum Verspannen der zu verbindenden Werkstücke (4, 5) zusammen mit der Maske (3) vor dem Fügen vorgesehen ist.

**14.** Vorrichtung nach einem der vorangegangenen Ansprüche 11 bis 13, **dadurch gekennzeichnet,** daß der linienförmige Laserstrahl (2) durch mindestens einen Halbleiterlaser erzeugt wird.

**15.** Vorrichtung nach Anspruch 14, **dadurch gekennzeichnet,** daß die Laserquelle (1) einen Laserstrahl (2) mit einem länglichen Querschnitt entsprechend der erfoderlichen Breite abgibt, den ein um eine zur Kontaktfläche (7) parallele Achse (20) schwenk- oder drehbarer Spiegel (21) umlenkt, der über der Maske (3) angeordnet und mittels eines Antriebs (22) betätigbar ist.

**Claims**

**1.** A laser joining method of joining different workpieces (4, 5) made of plastic, or joining plastic to other materials, where the top workpiece (4) facing the laser source (1) is made of a material that is transparent for the laser beam (2), and the second workpiece (5) is made of a material that is absorbent for the laser beam (2), so that the adjacent contact surfaces (7) of the two workpieces (4, 5) begin to melt and are bonded together in the subsequent cooling under pressure, characterized in that a mask (3) of a material that is impermeable for the laser is arranged between the laser source (1) and the workpieces (4, 5) to be joined for bonding the workpieces in a certain joining area (6) of the contact surface (7), the structures (9) of said mask being larger than the wavelength of the laser beam (2) used, the laser source (1) is directed at the contact surface (7) in such a way that a line (8) is formed on it, and either the mask (3) is moved together with the workpieces (4, 5) or the laser beam (2) is moved together with the mask (3).

**2.** A method according to claim 1, characterized in that the laser beam (2) is arranged at a right angle above the joining area (6) of the contact surface (7).

**3.** A method according to claim 1 or 2, characterized in that an additional joining pressure is applied when joining the workpieces (4, 5) to be bonded.

**4.** A method according to claim 3, characterized in that at least one workpiece (4, 5) has a projection in the direction of the other workpiece (4, 5) adjacent to the joining area (3), so that a cavity (18) is formed between the contact surface (7) to be bonded and the projection (16) when the two workpieces (4, 5) are pressed together.

**5.** A method according to one of the preceding claims, characterized in that the relative velocity between the laser source (1) and the workpieces (4, 5) is selected to be as high as possible as a function of the maximum laser power needed to achieve the required melting temperature.

**6.** A method according to one of the preceding claims, characterized in that the line width is selected to be essentially equal to the width of the joining area.

**7.** A method according to one of the preceding claims, characterized in that the linear laser beam (2) is created by at least one semiconductor laser.

**8.** A method according to claim 7, characterized in that the length of the laser line (8) is adjusted by the distance of the laser source (1) from the contact surface (7) and a corresponding adaptation of the laser power for the required melting temperature.

**9.** A method according to claim 7, characterized in that the width of the laser beam (2) is kept essentially constant with a change in the distance of the laser source (1) from the contact surface (7).

**10.** A method according to one of the preceding claims, characterized in that the relative movement between the laser beam (2) and the contact surface (7) is created by a mirror (21) which can be pivoted or rotated about an axis (20) parallel to the contact surface (7).

**11.** A device for joining various workpieces (4, 5) made of plastic or joining plastics to other materials by means of laser beams, where the top workpiece (4) facing the laser source (1) is made of a material that is transparent for the laser beam (2), and the second workpiece (5) is made of a material that is absorbent for the laser beam (2), so that the adjacent contact surfaces (7) of the two workpieces (4, 5) melt and are bonded together in the subsequent cooling under pressure, characterized by a laser source (1) and a mask (3) made of a material that is impermeable to lasers between the workpieces (4, 5) to be joined, where the structures (9) of the mask are larger than the wavelength of the laser beam (2) used, the laser source (1) is directed at the contact surface (7) so that a focus line (8) is formed there, and a device (21, 22) for a continuous movement of the laser beam (2) and the workpieces (4, 5) relative to one another.

**12.** A device according to claim 11, characterized in that the laser beam (2) is arranged at a right angle above the joining area (6) of the contact surface (7).

**13.** A device according to claim 11 or 12, characterized in that a clamping device (11, 12) is provided for clamping the workpieces (4, 5) to be joined together with the mask (3) before the joining operation.

**14.** A device according to one of the preceding claims 11 through 13, characterized in that the linear laser beam (2) is generated by at least one semiconductor laser.

**15.** A device according to claim 14, characterized in that the laser source (1) delivers a laser beam (2) with an elongated cross section corresponding to the required width, the beam is deflected by a mirror (21) that can be pivoted or rotated about an axis (20) parallel to the contact surface (7) and is arranged above the mask (3) and can be operated by a drive (22).

**Revendications**

**1.** Procédé de soudage avec laser pour relier des pièces diverses (4, 5) en matière plastique entre elles ou avec d'autres matériaux, la pièce du dessus (4), tournée vers la source laser (1) étant faite dans une matière transparente au rayon laser (2) et la seconde pièce (5), dans une matière absorbant le rayon laser (2), de sorte que les surfaces de contact (7) contiguës l'une de l'autre des deux pièces (4, 5) entrent en fusion et s'allient l'une à l'autre sous l'effet de la pression lors du refroidissement qui s'ensuit, caractérisé en ce qu'entre la source laser (1) et les pièces à relier (4, 5) on place, en vue du raccordement des pièces dans une zone de soudage déterminée (6) de la surface de contact (7), un masque (3) fait dans une matière opaque au laser, dont les structures (9) sont plus larges que la longueur d'onde du rayon laser (2) mise en oeuvre, en ce que la source laser (1) est mise au point de telle façon sur la surface de contact (7) qu'il se forme à cet endroit une ligne (8), et en ce que le masque (3) est déplacé avec les pièces (4, 5) ou le rayon laser (2) est déplacé avec le masque (3).

**2.** Procédé selon la revendication 1, caractérisé en ce que le rayon laser (2) est orienté perpendiculairement au dessus de la zone de soudage (6) de la surface de contact (7).

**3.** Procédé selon la revendication 1 ou 2, caractérisé en ce que lors de l'assemblage des pièces (4, 5) à relier, une pression d'assemblage supplémentaire est appliquée.

**4.** Procédé selon la revendication 3, caractérisé en ce qu'au voisinage de la zone de soudage (3), au moins une pièce (4, 5) présente un élément en saillie (16) dans la direction de l'autre pièce (5, 4), si bien qu'à la compression des deux pièces (4, 5), il se forme une cavité (18) entre la surface de contact à relier (7) et l'élément saillant (16).

**5.** Procédé selon l'une des revendications qui précèdent, caractérisé en ce que la vitesse relative entre la source laser (1) et les pièces (4, 5) est sélectionnée pour être la plus élevée possible en fonction de la puissance maximum du laser nécessaire pour atteindre la température de fusion requise.

**6.** Procédé selon l'une des revendications qui précèdent, caractérisé en ce que la largeur de ligne est choisie pour être sensiblement égale à la largeur de la zone de soudage.

**7.** Procédé selon l'une des revendications qui précèdent, caractérisé en ce que le rayon laser (2) formant une ligne est généré par au moins un laser à semiconducteur.

**8.** Procédé selon la revendication 7, caractérisé en ce que la longueur de la ligne laser (8) est mise au point par l'écartement entre la source laser (1) et la surface de contact (7) et l'adaptation correspondante de la puissance laser à la température de fusion requise.

**9.** Procédé selon la revendication 7, caractérisé en ce que la largeur du rayon laser (2) est tenue sensiblement constante en cas de variation de l'écartement entre la source laser (1) et la surface de contact (7).

**10.** Procédé selon l'une des revendications qui précèdent, caractérisé en ce que le mouvement relatif entre le rayon laser (2) et la surface de contact (7) est produit par un miroir (21) pivotant ou tournant autour d'un axe (20) parallèle à la surface de contact (7).

**11.** Dispositif pour relier des pièces diverses (4, 5) en matière plastique entre elles ou avec d'autres matériaux au moyen de rayons laser, la pièce du dessus (4), tournée vers la source laser (1) étant faite dans une matière transparente au rayon laser (2) et la seconde pièce (5), dans une matière absorbant le rayon laser (2), de sorte que les surfaces de contact (7) contiguës l'une de l'autre des deux pièces (4, 5) entrent en fusion et s'allient l'une à l'autre sous l'effet de la pression lors du refroidissement qui s'ensuit, caractérisé par une source laser (1) et un masque (3) en matière opaque au laser entre les pièces (4, 5) devant être reliées, les structures (9) du masque étant plus larges que la longueur d'onde du rayon laser (2) mise en oeuvre, en ce que la source laser (1) est mise au point de telle façon sur la surface de contact (7) qu'il se forme à cet endroit une ligne de focalisation (8), et par un mécanisme (21, 22) animant le rayon laser (2) et les pièces (4, 5) d'un mouvement relatif continu les uns par rapport aux autres.

**12.** Dispositif selon la revendication 11, caractérisé en ce que le rayon laser (2) est orienté perpendiculairement au dessus de la zone de soudage (6) de la surface de contact (7).

**13.** Dispositif selon la revendication 11 ou 12, caractérisé en ce qu'un dispositif de serrage (11, 12) est prévu pour serrer les pièces à relier (4, 5) avec le masque (3) avant le soudage.

**14.** Dispositif selon l'une des revendications précédentes 11 à 13, caractérisé en ce que le rayon laser (2) formant une ligne est généré par au moins un laser à semiconducteur.

**15.** Dispositif selon la revendication 14, caractérisé en ce que la source laser (1) émet un rayon laser (2) d'une section transversale oblongue en fonction de la largeur requise, rayon que dévie un miroir (21) pivotant ou tournant autour d'un axe (20) parallèle à la surface de contact (7), qui est placé au-dessus du masque (3) et peut être actionné à l'aide d'une commande d'entraînement (22).

Fig. 1

Fig. 2

Fig. 3

Fig. 4

Fig.5

Fig. 6